# EUROPEAN PATENT APPLICATION

(11) **EP 4 145 014 A1**
(43) Veröffentlichungstag der Anmeldung: **08.03.2023**
(21) Anmeldenummer: 20933762.5
(22) Anmeldetag: 29.04.2020
(51) Int. Cl.: F16F 15/134, F16F 15/139, F16F 15/14

(54) **FAHRZEUGSTOSSDÄMPFER UND FAHRZEUG**

(71) Anmelder: Schaeffler Technologies AG & Co. KG, 91074 Herzogenaurach (DE)
(72) Erfinder: XIAO, Rongting, Kunshan, Jiangsu 215332 (CN)
(86) Internationale Anmeldenummer: PCT/CN2020/087860
(87) Internationale Veröffentlichungsnummer: WO 2021/217515

(57) **Zusammenfassung**

Die vorliegende Erfindung betrifft einen Fahrzeugschwingungsdämpfer mit einer axialen Richtung, einer radialen Richtung und einer Umfangsrichtung, wobei ein Drehmoment von einer Leistungsquelle eines Fahrzeugs über den Fahrzeugschwingungsdämpfer auf ein Getriebe des Fahrzeugs übertragen wird, wobei das über den Fahrzeugschwingungsdämpfer übertragene Drehmoment nicht größer als eine durch den Fahrzeugschwingungsdämpfer definierte vorbestimmte Drehmomentkapazität ist und der Fahrzeugschwingungsdämpfer verwendet wird, um Torsionsschwingungen des übertragenen Drehmoments zu dämpfen. Der Fahrzeugschwingungsdämpfer umfasst drei aneinander befestigte Seitenplatten, einen Flansch, der relativ zu den drei Seitenplatten entlang der Umfangsrichtung innerhalb eines vorbestimmten Bereichs gedreht werden kann, eine Vielzahl von Dämpfungsfedern, eine Fliehkraftpendeleinheit und einen Drehmomentbegrenzungmechanismus. Der Flansch kann ein Drehmoment über die Vielzahl von Dämpfungsfedern auf die drei Seitenplatten übertragen und die Fliehkraftpendeleinheit ist zwischen einer ersten Seitenplatte und einer zweiten Seitenplatte der drei Seitenplatten oder zwischen einer zweiten Seitenplatte und einer dritten Seitenplatte der drei Seitenplatten angeordnet. Der Drehmomentbegrenzungsmechanismus ist zwischen der zweiten Seitenplatte und der dritten Seitenplatte angeordnet, um eine vorbestimmte Drehmomentkapazität zu definieren. Es wird auch ein Fahrzeug bereitgestellt, das den oben erwähnten Fahrzeugschwingungsdämpfer umfasst.

## Beschreibung

Die vorliegende Erfindung betrifft das Gebiet der Fahrzeugschwingungsdämpfung und insbesondere einen Fahrzeugschwingungsdämpfer und ein Fahrzeug, das den Fahrzeugschwingungsdämpfer umfasst.

Aufgrund der sehr hohen Anforderungen an die Schwingungsdämpfungsleistung von Fahrzeugen wird als Schwingungsdämpfer zur Dämpfung von Schwingungen im Allgemeinen ein Zweimassenschwungrad mit großer Bogenfeder verwendet, wobei diese Art von Schwingungsdämpfern meist in bestehenden Nutzfahrzeugen zum Einsatz kommt. Die in diesen Schwingungsdämpfern verwendete Bogenfeder ist jedoch teuer und muss auf eine entsprechende relativ komplexe Konstruktion abgestimmt werden, um normal funktionieren zu können, was zu einer relativ komplizierten Konstruktion und relativ hohen Kosten dieser Schwingungsdämpfer führt. Darüber hinaus haben viele der obigen Schwingungsdämpfer für Systeme, in denen diese Schwingungsdämpfer verwendet sind, keine entsprechenden Maßnahmen zum Schutz vor Drehmomentüberlastung, und somit fehlt ein notwendiger Drehmomentüberlastschutz für die Systeme.

Die vorliegende Erfindung wurde im Hinblick auf den oben beschriebenen Stand der Technik gemacht. Eine Aufgabe der vorliegenden Erfindung besteht darin, einen Fahrzeugschwingungsdämpfer bereitzustellen, der kostengünstiger als der oben beschriebene Schwingungsdämpfer ist und ein System, in dem der Schwingungsdämpfer gemäß der vorliegenden Erfindung verwendet wird, vor Drehmomentüberlastung schützen kann. Eine weitere Aufgabe der vorliegenden Erfindung besteht darin, ein Fahrzeug bereitzustellen, das den Fahrzeugschwingungsdämpfer gemäß der vorliegenden Erfindung verwendet.

Um die oben genannten Aufgaben der Erfindung zu lösen, nimmt die vorliegende Erfindung die folgenden technischen Lösungen an.

Die vorliegende Erfindung stellt einen Fahrzeugschwingungsdämpfer mit einer axialen Richtung, einer radialen Richtung und einer Umfangsrichtung bereit, wobei ein Drehmoment von einer Leistungsquelle eines Fahrzeugs über den Fahrzeugschwingungsdämpfer auf ein Getriebe des Fahrzeugs übertragen wird, wobei das über den Fahrzeugschwingungsdämpfer übertragene Drehmoment nicht größer als eine durch den Fahrzeugschwingungsdämpfer definierte vorbestimmte Drehmomentkapazität ist und der Fahrzeugschwingungsdämpfer verwendet wird, um eine Torsionsschwingung des übertragenen Drehmoments zu dämpfen und wobei der Fahrzeugschwingungsdämpfer umfasst:
drei Seitenplatten, die aneinander befestigt sind, wobei eine zweite Seitenplatte der drei Seitenplatten in der axialen Richtung sich zwischen einer ersten Seitenplatte auf einer axialen Seite und einer dritten Seitenplatte auf der anderen axialen Seite befindet, wobei zwischen der ersten Seitenplatte und der zweiten Seitenplatte eine Vielzahl von Dämpfungsfederaufnahmen ausgebildet sind;
einen Flansch, der sich zwischen der ersten Seitenplatte und der zweiten Seitenplatte in der axialen Richtung befindet und relativ zu der ersten Seitenplatte und der zweiten Seitenplatte entlang der Umfangsrichtung innerhalb eines vorbestimmten Bereichs gedreht werden kann, wobei der Flansch zum Aufnehmen des Drehmoments der Leistungsquelle verwendet wird;
eine Vielzahl von Dämpfungsfedern, die entlang der Umfangsrichtung voneinander beabstandet in den entsprechenden Dämpfungsfederaufnahmen aufgenommen sind, wobei ein Kreiswinkel, dem jede der Dämpfungsfedern entspricht, 90 Grad nicht überschreitet und wobei der Flansch ein Drehmoment über die Vielzahl von Dämpfungsfedern auf die drei Seitenplatten übertragen kann;
eine Fliehkraftpendeleinheit, die zwischen der ersten Seitenplatte und der zweiten Seitenplatte oder zwischen der zweiten Seitenplatte und der dritten Seitenplatte angeordnet ist oder an einer der ersten Seitenplatte, der zweiten Seitenplatte und der dritten Seitenplatte angeordnet ist; und
einen Drehmomentbegrenzungsmechanismus, der zwischen der zweiten Seitenplatte und der dritten Seitenplatte angeordnet ist, um die vorbestimmte Drehmomentkapazität zu definieren.

Vorzugsweise umfasst der Fahrzeugschwingungsdämpfer ferner eine Schwungmasse, die mit dem Flansch zusammen befestigt ist.

Besonders bevorzugt sind die erste Seitenplatte und die zweite Seitenplatte jeweils mit einander gegenüberliegenden Fenstern zum Bilden der Dämpfungsfederaufnahmen ausgebildet, sodass die Dämpfungsfedern zwischen der ersten Seitenplatte und der zweiten Seitenplatte montiert sind, und
die zweite Seitenplatte ist auch mit Bahnen zum Definieren einer Bewegungstrajektorie einer Pendelmasse der Fliehkraftpendeleinheit ausgebildet.

Besonders bevorzugt umfasst der Drehmomentbegrenzungsmechanismus eine Trägerplatte und zwei Reibungsabschnitte, die in der axialen Richtung durch die Trägerplatte voneinander beabstandet angeordnet sind, wobei unter Verwendung der Reibung zwischen den zwei Reibungsabschnitten und der Trägerplatte das Drehmoment von den drei Seitenplatten über die beiden Reibungsabschnitte auf die Trägerplatte übertragen werden kann.

Besonders bevorzugt umfasst der Drehmomentbegrenzungsmechanismus ferner eine Membranfeder, die zwischen der zweiten Seitenplatte und dem entsprechenden Reibungsabschnitt oder zwischen der dritten Seitenplatte und dem entsprechenden Reibungsabschnitt angeordnet ist, wobei durch eine Federkraft der Membranfeder in der axialen Richtung die beiden Reibungsabschnitte die Trägerplatte kraftschlüssig klemmen können.

Besonders bevorzugt umfasst der Drehmomentbegrenzungsmechanismus ferner eine Stützscheibe, die zwischen der Membranfeder und dem entsprechenden Reibungabschnitt angeordnet ist.

Besonders bevorzugt ist die Fliehkraftpendeleinheit auf einer radial äußeren Seite des Flansches oder einer radial äußeren Seite des Drehmomentbegrenzungsmechanismus angeordnet.

Besonders bevorzugt umfasst die Fliehkraftpendeleinheit eine Pendelmasse und ein Pufferelement zum Puffern einer radialen Stoßbelastung der Pendelmasse, wobei das Pufferelement auf einer radial inneren Seite der Pendelmasse angeordnet ist und wobei das Pufferelement an der ersten Seitenplatte und der zweiten Seitenplatte oder an der zweiten Seitenplatte und der dritten Seitenplatte befestigt ist.

Besonders bevorzugt umfasst der Fahrzeugschwingungsdämpfer ferner einen Nabenkern, der drehfest mit der Trägerplatte des Drehmomentbegrenzungsmechanismus verbunden ist, wobei der Nabenkern in der Lage ist, ein Drehmoment auf eine Eingangswelle des Getriebes zu übertragen.

Die vorliegende Erfindung stellt auch ein Fahrzeug bereit, das einen Fahrzeugschwingungsdämpfer gemäß einer der obigen technischen Lösungen umfasst.

Unter Verwendung der oben erwähnten technischen Lösungen stellt die vorliegende Erfindung einen neuen Typ eines Fahrzeugschwingungsdämpfers und ein Fahrzeug bereit, das den Fahrzeugschwingungsdämpfer umfasst. Durch den Fahrzeugschwingungsdämpfer wird ein Drehmomentbegrenzungsmechanismus mit einem Schwingungsdämpfungssystem antriebsverbunden, das aus einer Vielzahl von in Umfangsrichtung voneinander beabstandet angeordneten Dämpfungsfedern und einer Fliehkraftpendeleinheit besteht. Auf diese Weise kann einerseits unter Verwendung des Schwingungsdämpfungssystems bei der Drehmomentübertragung des Fahrzeugschwingungsdämpfers eine Schwingung während des Drehmomentübertragungsvorgangs effektiv abgeschwächt oder sogar eliminiert werden; andererseits ist es mit dem Drehmomentbegrenzungsmechanismus, der eine vorbestimmte Drehmomentkapazität hat, möglich zu verhindern, dass ein übermäßiges Drehmoment von einer Leistungsquelle eines Fahrzeugs auf ein Getriebe übertragen wird, wodurch eine Situation einer Drehmomentüberlastung vermieden wird. Darüber hinaus wird in dem Fahrzeugschwingungsdämpfer gemäß der vorliegenden Erfindung keine übermäßig lange Bogenfeder verwendet, wodurch im Vergleich zu einem Schwingungsdämpfer nach dem Stand der Technik Kosten gespart werden.
Fig. 1a zeigt einen Fahrzeugschwingungsdämpfer gemäß einer ersten Ausführungsform der vorliegenden Erfindung in einer schematischen Schnittansicht;
Fig. 1b zeigt den Fahrzeugschwingungsdämpfer in Fig. 1a in einer schematischen Explosionsansicht.
Fig. 2a zeigt einen Fahrzeugschwingungsdämpfer gemäß einer zweiten Ausführungsform der vorliegenden Erfindung in einer schematischen Schnittansicht;
Fig. 2b zeigt den Fahrzeugschwingungsdämpfer in Fig. 2a in einer schematischen Explosionsansicht.

Beispielhafte Ausführungsformen der vorliegenden Erfindung werden nachstehend unter Bezugnahme auf die beigefügten Zeichnungen beschrieben. Es versteht sich, dass diese spezifischen Beschreibungen nur verwendet werden, um einem Fachmann zu lehren, wie die vorliegende Erfindung zu implementieren ist, anstatt alle möglichen Möglichkeiten der Erfindung erschöpfend darzustellen oder den Umfang der Erfindung einzuschränken.

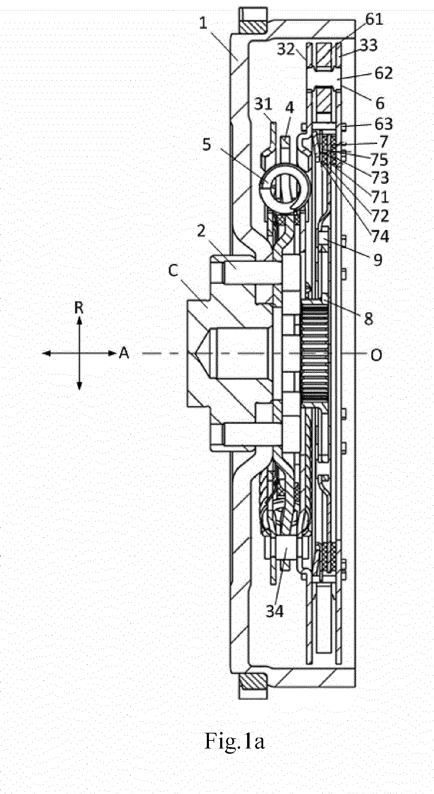

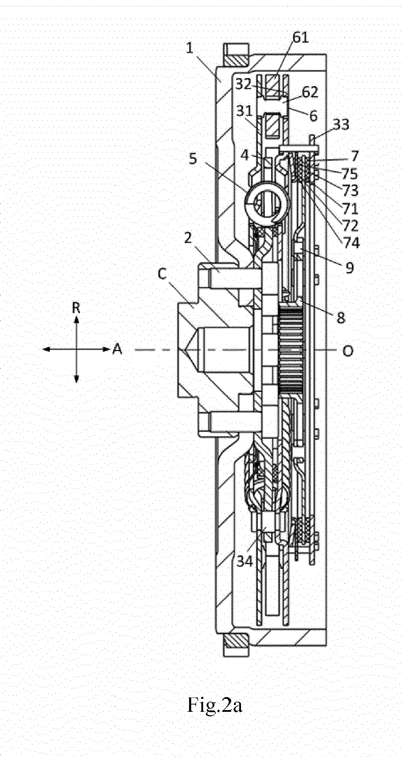

In der vorliegenden Erfindung beziehen sich, sofern nicht anders angegeben, eine axiale Richtung, eine radiale Richtung und eine Umfangsrichtung jeweils auf die axiale Richtung, die radiale Richtung und die Umfangsrichtung des Fahrzeugschwingungsdämpfers; eine axiale Seite bezieht sich auf die linke Seite in Fig. 1a und Fig. 2a (beispielsweise die Seite, auf der sich ein Motor befindet); die andere axiale Seite bezieht sich auf die rechte Seite in Fig. 1a und Fig. 2a (beispielsweise die Seite, auf der sich ein Getriebe befindet); eine radial äußere Seite bezieht sich auf die Seite radial entfernt von einer Mittelachse O in Fig. 1a und Fig. 2a, und eine radial innere Seite bezieht sich auf die Seite radial nahe der Mittelachse O. Außerdem bezieht sich "Antriebsverbinden" auf eine Fähigkeit, Antriebskraft/Drehmoment zwischen zwei Komponenten zu übertragen, die direkt oder durch verschiedene Übertragungsmechanismen bzw. Verbindungsstrukturen verbunden sein können, um die oben erwähnte Funktion zu erreichen.

Der Aufbau und die Wirkung des Fahrzeugschwingungsdämpers gemäß einer ersten Ausführungsform der vorliegenden Erfindung werden zuerst nachstehend unter Bezugnahme auf die beigefügten Zeichnungen beschrieben.

### (Fahrzeugschwingungsdämpfer gemäß der ersten Ausführungsform der vorliegenden Erfindung)

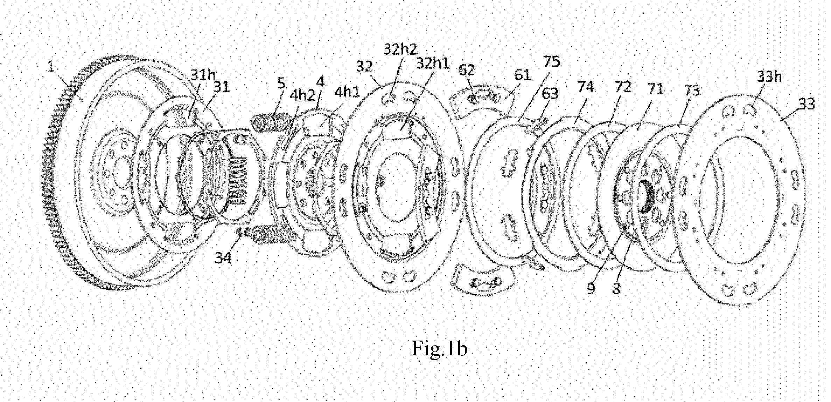

Wie in Fig. 1a und Fig. 1b gezeigt, hat der Fahrzeugschwingungsdämpfer gemäß der ersten Ausführungsform der vorliegenden Erfindung insgesamt eine Kreisringform und umfasst eine Schwungmasse 1, ein erstes Befestigungselement 2, drei Seitenplatten (eine erste Seitenplatte 31, eine zweite Seitenplatte 32 und eine dritte Seitenplatte 33), einen Flansch 4, eine Dämpfungsfeder 5, eine Fliehkraftpendeleinheit 6, einen Drehmomentbegrenzungsmechanismus 7, einen Nabenkern 8 und ein zweites Befestigungselement 9, die zusammengebaut sind.

In der vorliegenden Ausführungsform hat die Schwungmasse 1 eine Kreisringform und wird zur festen Verbindung mit einer Motorkurbelwelle C eines Fahrzeugs verwendet, wobei die Schwungmasse 1 einen radialen Schwungmassenabschnitt und einen axialen Schwungmassenabschnitt umfasst, die in einem Stück gebildet sind. Der radiale Schwungmassenabschnitt erstreckt sich im Wesentlichen entlang der radialen Richtung R, und der axiale Schwungmassenabschnitt erstreckt sich von einem radial äußeren Ende des radialen Schwungmassenabschnitts entlang der axialen Richtung A zu der anderen axialen Seite um eine vorgegebene Länge. Außerdem umfasst die Schwungmasse 1 ferner eine Verzahnung, die an einem Außenumfang des axialen Schwungmassenabschnitts vorgesehen ist, sodass eine elektrische Maschine des Fahrzeugs über die Verzahnung den Motor starten kann. Die Schwungmasse 1 soll ein erhebliches Gewicht haben, um sicherzustellen, dass der Schwingungsdämpfer ein ausreichendes Trägheitsmoment hat.

Außerdem ist ein radial innerer Abschnitt der Schwungmasse 1 mit einer Vielzahl von Schwungmassenbefestigungslöchern ausgebildet, die entlang der axialen Richtung A durchgehen. Die Schwungmasse 1 kann fest mit einer Motorkurbelwelle C eines Fahrzeugs mittels der ersten Befestigungselemente 2 verbunden werden, die durch die Vielzahl von Schwungmassenbefestigungslöchern hindurchgehen.

In der vorliegenden Ausführungsform haben die Vielzahl von ersten Befestigungselementen 2 und die Vielzahl von Schwungmassenbefestigungslöchern der Schwungmasse 1 eine gleiche Anzahl und entsprechen einander eindeutig, wobei die ersten Befestigungselemente 2 Befestigungsschrauben sein können.

In der vorliegenden Ausführungsform sind die drei Seitenplatten (die erste Seitenplatte 31, die zweite Seitenplatte 32 und die dritte Seitenplatte 33) alle in Kreisringform ausgebildet. Die erste Seitenplatte 31 befindet sich auf einer axialen Seite des Flansches 4, und die zweite Seitenplatte 32 befindet sich auf der anderen axialen Seite des Flansches 4, sodass die erste Seitenplatte 31 und die zweite Seitenplatte 32 in der axialen Richtung A getrennt durch den Flansch 4 gegenüberliegend angeordnet sind. Die erste Seitenplatte 31 und die zweite Seitenplatte 32 können über mehrere dazwischen angeordnete Befestigungsbegrenzungselemente 34 aneinander befestigt sein, sodass sich die erste Seitenplatte 31 und die zweite Seitenplatte 32 als Ganzes bewegen können. Die zweite Seitenplatte 32 befindet sich auf einer axialen Seite des Drehmomentbegrenzungsmechanismus 7, und die dritte Seitenplatte 33 befindet sich auf der anderen axialen Seite des Drehmomentbegrenzungsmechanismus 7, sodass die zweite Seitenplatte 32 und die dritte Seitenplatte 33 in der axialen Richtung A getrennt durch den Drehmomentbegrenzungsmechanismus 7 gegenüberliegend angeordnet sind. Die zweite Seitenplatte 32 und die dritte Seitenplatte 33 können über mehrere dazwischen angeordnete Pufferelemente 63 aneinander befestigt sein, sodass sich die zweite Seitenplatte 32 und die dritte Seitenplatte 33 als Ganzes bewegen können.

Ferner ist die erste Seitenplatte 31 mit vier ersten Fenstern 31h ausgebildet, die in der axialen Richtung A durchgehen, wobei die vier ersten Fenster 31h gleichmäßig in der Umfangsrichtung verteilt sind. Die zweite Seitenplatte 32 ist mit vier zweiten Fenstern 32h1 ausgebildet, die in der axialen Richtung A durchgehen, wobei die vier zweiten Fenster 32h1 gleichmäßig in der Umfangsrichtung verteilt sind. Die Position jedes zweiten Fensters 32h1 entspricht der Position des entsprechenden ersten Fensters 31h. Auf diese Weise ist eine Dämpfungsfederaufnahme zum Aufnehmen der Dämpfungsfeder 5 durch das erste Fenster 31h der ersten Seitenplatte 31 und das zweite Fenster 32h1 der zweiten Seitenplatte 32 gebildet.

Ferner ist die zweite Seitenplatte 32 mit mehreren Sätzen von ersten Bahnen 32h2 ausgebildet, die in der axialen Richtung A durchgehen und in Richtung der radial äußeren Seite gebogen sind, wobei die ersten Bahnen 32h2 an der radial äußeren Seite des zweiten Fensters 32h1 angeordnet sind. Die dritte Seitenplatte 33 ist mit mehreren Sätzen von zweiten Bahnen 33h ausgebildet, die in der axialen Richtung A durchgehen und in Richtung der radial äußeren Seite gebogen sind, wobei jeder Satz von zweiten Bahnen 33h jedem Satz von ersten Bahnen 32h2 entspricht. Sowohl die erste Bahn 32h2 der zweiten Seitenplatte 32 als auch die zweite Bahn 33h der dritten Seitenplatte 33 dienen dazu, die Bewegungstrajektorie einer Verbindungsrolle 62 der Fliehkraftpendeleinheit 6 zu definieren.

Ferner sind sowohl die erste Seitenplatte 31 als auch die zweite Seitenplatte 32 mit Montagelöchern ausgebildet, in die die Befestigungsbegrenzungselemente 34 eingeführt werden können, wobei die Positionen der Montagelöcher in der radialen Richtung R im Wesentlichen gleich wie jene der ersten Fenster 31h und der zweiten Fenster 32h1 sind. An der ersten Seitenplatte 31 sind die Montagelöcher und die ersten Fenster 31h in Umfangsrichtung abwechselnd angeordnet, und an der zweiten Seitenplatte 32 sind die Montagelöcher und die zweiten Fenster 32h1 in Umfangsrichtung abwechselnd angeordnet.

In der vorliegenden Ausführungsform ist der Flansch 4 auch in Kreisringform ausgebildet. Der Flansch 4 ist zusammen mit der Schwungmasse 1 über das erste Befestigungselement 2 an der Motorkurbelwelle C befestigt und kann sich relativ zu den drei Seitenplatten 31, 32, 33 entlang der Umfangsrichtung innerhalb eines vorbestimmten Bereichs drehen.

Ferner ist der Flansch 4 auch mit vier dritten Fenstern 4h1 ausgebildet, die in der axialen Richtung A durchgehen. Die vier dritten Fenster 4h1 sind gleichmäßig in der Umfangsrichtung verteilt, und jedes dritte Fenster 4h1 entspricht jeweils dem ersten Fenster 31h der ersten Seitenplatte 31 und dem zweiten Fenster 32h1 der zweiten Seitenplatte 32. Nachdem die Dämpfungsfeder 5 in dem dritten Fenster 4h1 des Flansches 4 montiert wurde, wird auf diese Weise die Dämpfungsfeder 5 durch das erste Fenster 31h der ersten Seitenplatte 31, das zweite Fenster 32h1 der zweiten Seitenplatte 32 und das dritte Fenster 4h1 des Flansches in der Umfangsrichtung, in der axialen Richtung A und in der radialen Richtung R begrenzt.

Ferner ist der Flansch 4 auch mit vier bogenförmigen Begrenzungslöchern 4h2 ausgebildet, die sich entlang der Umfangsrichtung erstrecken. Die vier Begrenzungslöcher 4h2 sind in der Umfangsrichtung gleichmäßig verteilt, und jedes Begrenzungsloch 4h2 ist zwischen zwei in der Umfangsrichtung zueinander benachbarten dritten Fenstern 4h1 angeordnet. Das Befestigungsbegrenzungselement 34 geht durch das entsprechende Begrenzungsloch 4h2 hindurch und beide Enden des Befestigungsbegrenzungselements 34 sind jeweils in den oben erwähnten Montagelöchern der ersten Seitenplatte 31 und der zweiten Seitenplatte 32 befestigt. Auf diese Weise kann einerseits das Befestigungsbegrenzungselement 34 die erste Seitenplatte 31 und die zweite Seitenplatte 32 fixieren und sich zusammen mit der ersten Seitenplatte 31 und der zweiten Seitenplatte 32 drehen und andererseits ist die Drehung des Befestigungsbegrenzungselements 34 relativ zum Flansch 4 durch die Länge des Begrenzungslochs 4h2 begrenzt, womit das Begrenzungsloch 4h2 und das Befestigungsbegrenzungselement 34 miteinander zusammenwirken, um den Bereich der Relativdrehung des Flansches 4 relativ zu der ersten Seitenplatte 31 und der zweiten Seitenplatte 32 entlang der Umfangsrichtung zu definieren.

In der vorliegenden Ausführungsform ist jede Dämpfungsfeder 5 eine lineare zylindrische Schraubenfeder. Die Dämpfungsfeder 5 ist in dem dritten Fenster 4h1 des Flansches derart montiert, dass ihre Längsrichtung tangential zur Umfangsrichtung ist, um in der durch das erste Fenster 31h der ersten Seitenplatte 31 und das zweite Fenster 32h1 der zweiten Seitenplatte 32 definierten Dämpfungsfederaufnahme aufgenommen zu werden. Daher wird durch die erste Seitenplatte 31, die zweite Seitenplatte 32 und den Flansch 4 eine Begrenzung der Dämpfungsfeder 5 in drei Richtungen, nämlich der axialen Richtung A, der radialen Richtung R und der Umfangsrichtung realisiert. Außerdem ist in dieser Ausführungsform die zylindrische Schraubenfeder keine bogenförmige Schraubenfeder mit einer relativ großen Länge im Stand der Technik, und ein Mittelpunktswinkel, dem die zylindrische Schraubenfeder entspricht, überschreitet nicht 90 Grad. Auf diese Weise können die bogenförmige Schraubenfeder mit relativ großer Länge und die darauf abgestimmten Bauteile weggelassen werden, wodurch Kosten eingespart werden.

Wenn ferner der Flansch 4 in der Umfangsrichtung bezüglich sowohl der ersten Seitenplatte 31 als auch der zweiten Seitenplatte 32 unter Drehmoment von der Motorkurbelwelle C gedreht wird, drückt der Flansch 4 die Dämpfungsfeder 5 zusammen, sodass die Dämpfungsfeder 5 bei der Drehmomentübertragung auf die erste Seitenplatte 31 und die zweite Seitenplatte 32 den Effekt der Dämpfung von Torsionsschwingungen erreicht. Außerdem wird der Kompressionsbetrag der Dämpfungsfeder 5 durch das oben erwähnte Befestigungsbegrenzungselement 34 und das Begrenzungsloch 4h2 definiert.

In dieser Ausführungsform sind die vier Fliehkraftpendeleinheiten 6 in der Umfangsrichtung gleichmäßig verteilt zwischen der zweiten Seitenplatte 32 und der dritten Seitenplatte 33 montiert, und die Fliehkraftpendeleinheiten 6 befinden sich auf der radial äußeren Seite des Drehmomentbegrenzungsmechanismus 7. Auf diese Weise kann eine Störung zwischen dem Drehmomentbegrenzungsmechanismus 7 und den Fliehkraftpendeleinheiten 6 vermieden werden.

Insbesondere umfasst jede Fliehkraftpendeleinheit 6 eine Pendelmasse 61, zwei Verbindungsrollen 62 und ein Pufferelement 63. Die Pendelmasse 61 hat insgesamt eine Sektorform und ist in der axialen Richtung A zwischen der zweiten Seitenplatte 32 und der dritten Seitenplatte 33 angeordnet. Die Pendelmasse 61 ist mit einer mäandernden Bahn ausgebildet, die Erstreckungskomponenten sowohl in der Umfangsrichtung als auch in der radialen Richtung R enthält. Jede Verbindungsrolle 62 verläuft durch die Bahn, und beide Enden jeder Verbindungsrolle 62 sind jeweils an der ersten Bahn 32h2 der zweiten Seitenplatte 32 und der zweiten Bahn 33h der dritten Seitenplatte 33 angebracht. Wenn der Fahrzeugschwingungsdämpfer gemäß der vorliegenden Erfindung arbeitet, weist die Pendelmasse 61 auf diese Weise mit einer Pendelung der Pendelmasse 61 auf der Verbindungsrolle 62 Bewegungskomponenten in der Umfangsrichtung und der radialen Richtung R auf. Es versteht sich, dass die Fliehkraftpendeleinheit 6 eine Torsionsschwingung während des Arbeitsprozesses des Motors wirksam unterdrücken kann.

Ferner sind acht Pufferelemente 63 gleichmäßig in der Umfangsrichtung verteilt, und jedes Pufferelement 63 ist eine unabhängige Komponente. Alle Pufferelemente 63 sind zwischen der zweiten Seitenplatte 32 und der dritten Seitenplatte 33 in der axialen Richtung A und zwischen der Fliehkraftpendeleinheit 6 und dem Drehmomentbegrenzungsmechanismus 7 in der radialen Richtung R angeordnet. In dieser Ausführungsform sind zwei Pufferelemente 63 einer Fliehkraftpendeleinheit 6 zugeordnet. Insbesondere enthält jedes Pufferelement 63 einen bogenförmigen Grundkörper, der sich entlang der Umfangsrichtung erstreckt, und Einsetzabschnitte, die sich von dem Grundkörper zu beiden axialen Seiten erstrecken. Der Grundkörper erstreckt sich über eine ausreichende Länge in der Umfangsrichtung und seine Form passt zum Innenumfangsrand der Pendelmasse 61. Die Grundkörper der einer Fliehkraftpendeleinheit 6 zugeordneten beiden Pufferelemente 63 sind jeweils an den zwei Enden der Pendelmasse 61 der Fliehkraftpendeleinheit 6 angeordnet, und die Grundkörper der beiden Pufferelemente 63 und die Pendelmasse 61 der Fliehkraftpendeleinheit 6 sind in der Umfangsrichtung teilweise überlappt, sodass die Pendelmasse 61 der Fliehkraftpendeleinheit 6 an den Grundkörpern der beiden Pufferelemente 63 anliegen kann, nachdem sie eine vorgegebene Strecke in Richtung der radial inneren Seite wanderte, damit die beiden Pufferelemente 63 einer radialen Stoßbelastung der Pendelmasse 61 der Fliehkraftpendeleinheit 6 standhalten, wodurch eine Wirkung der radialen Stoßbelastung auf die Verbindungsrolle 62 vermieden bzw. reduziert wird. Zwei Einsetzabschnitte sind jeweils auf beiden Seiten jedes Pufferelements 63 ausgebildet, wobei die Einsetzabschnitte in die entsprechenden Montagelöcher der zweiten Seitenplatte 32 und der dritten Seitenplatte 33 eingesetzt sind, sodass sich die Fähigkeit des Pufferelements 63 verbessert, radialen Stößen standzuhalten, und eine Befestigungswirkung auf die zweite Seitenplatte 32 und die dritte Seitenplatte 33 erreicht wird.

In der vorliegenden Ausführungsform ist der Drehmomentbegrenzungsmechanismus 7 zwischen der zweiten Seitenplatte 32 und der dritten Seitenplatte 33 in der axialen Richtung A angeordnet und umfasst eine Trägerplatte 71, zwei Reibungsabschnitte (einen ersten Reibungsabschnitt 72 und einen zweiten Reibungsabschnitt 73), eine Membranfeder 74 und eine Stützscheibe 75.

Insbesondere ist die Trägerplatte 71 mit dem Nabenkern 8 durch das zweite Befestigungselement 9 zum Übertragen eines Drehmoments auf die Eingangswelle des Getriebes verbunden, und die Trägerplatte 71 und die beiden Reibungsabschnitte 72, 73 können unter Verwendung der Reibung zwischen der Trägerplatte 71 und den zwei Reibungsabschnitten 72, 73 durch Reibkraft miteinander antriebsverbunden werden.

Ferner sind die zwei Reibungsabschnitte 72, 73 in der axialen Richtung A durch die Trägerplatte 71 voneinander beabstandet angeordnet. Die zwei Reibungsabschnitte 72, 73 umfassen einen ersten Reibungsabschnitt 72 auf einer axialen Seite der Trägerplatte 71 und einen zweiten Reibungsabschnitt 73 auf der anderen axialen Seite der Trägerplatte 71. Der erste Reibungsabschnitt 72 und der zweite Reibungsabschnitt 73 sind getrennt durch die Trägerplatte 71 auf beiden axialen Seiten der Trägerplatte 71 vorgesehen und liegen an der Trägerplatte 71 von beiden axialen Seiten an. Der erste Reibungsabschnitt 72 ist zwischen der Trägerplatte 71 und der zweiten Seitenplatte 32 angeordnet, und der zweite Reibungsabschnitt 73 ist zwischen der Trägerplatte 71 und der dritten Seitenplatte 33 angeordnet und liegt an der dritten Seitenplatte 33 an. Auf diese Weise kann unter Verwendung der Reibungskraft zwischen den zwei Reibungsabschnitten 72, 73 und der Trägerplatte 71 das Drehmoment von der zweiten Seitenplatte 32 und der dritten Seitenplatte 33 glatt über die zwei Reibungsabschnitte 72, 73 auf die Trägerplatte 71 übertragen werden.

Ferner sind die Membranfeder 74 und die Stützscheibe 75 zwischen dem ersten Reibungsabschnitt 72 und der zweiten Seitenplatte 32 angeordnet, wobei der Außenumfang der Membranfeder 74 an der zweiten Seitenplatte 32 und der Innenumfang an der Stützscheibe 75 anliegt, damit die Stützscheibe 75 an dem ersten Reibungsabschnitt 72 anliegt, sodass die beiden Reibungsabschnitte 72, 73 unter der Wirkung der Federkraft der Membranfeder 74 gegen die Trägerplatte 71 gedrückt werden. Darüber hinaus kann durch das Zusammenwirken der zwei Reibungsabschnitte 72, 73 mit der Membranfeder 74 unter der Wirkung der Federkraft der Membranfeder 74 eine axiale Positionierung des ersten Reibungsabschnitts 72, des zweiten Reibungsabschnitts 73 und der Trägerplatte 71 auch realisiert werden.

Damit kann unter Verwendung des oben beschriebenen Drehmomentbegrenzungsmechanismus 7 ein Drehmoment, das seine Drehmomentkapazität nicht übersteigt, auf die Eingangswelle des Getriebes übertragen werden. Sobald jedoch das übertragene Drehmoment die Drehmomentkapazität des Drehmomentbegrenzungsmechanismus 7 übersteigt, tritt Schlupf zwischen den zwei Reibungsabschnitten 72, 73 und der Trägerplatte 71 auf, wodurch verhindert wird, dass ein übermäßiges Drehmoment auf den Schwingungsdämpfungsmechanismus und das Getriebe übertragen wird.

In der vorliegenden Ausführungsform ist der Nabenkern 8 kreisringförmig ausgebildet und durch die Vielzahl von zweiten Befestigungselementen 9 an der Trägerplatte 71 des Drehmomentbegrenzungsmechanismus 7 befestigt. Der Innenumfang des Nabenkerns 8 ist mit Keilen zum Eingriff mit der Eingangswelle des Getriebes ausgebildet, wobei das Drehmoment von der Motorkurbelwelle C durch die Keilen schließlich auf die Eingangswelle des Getriebes übertragen werden kann.

Durch Anwenden des Fahrzeugschwingungsdämpfers mit der oben beschriebenen Konfiguration können in der vorliegenden Ausführungsform die folgenden Wirkungen erzielt werden.

Wenn das Drehmoment von der Motorkurbelwelle C eine vorbestimmte Reibungsdrehmomentkapazität des Drehmomentbegrenzungsmechanismus 7 nicht überschreitet, ist ein Übertragungspfad des Drehmoments: Motorkurbelwelle C → Schwungmasse 1 und Flansch 4 → Dämpfungsfeder 5 → drei Seitenplatten 31, 32, 33 und Fliehkraftpendeleinheit 6 → zwei Reibungsabschnitte 72, 73 → Trägerplatte 71 → Nabenkern 8 → Eingangswelle des Getriebes, wobei im Übertragungsvorgang des Drehmoments von der Leistungsquelle in dem oben erwähnten Übertragungspfad die Torsionsschwingung durch die Dämpfungsfeder 5 und die Fliehkraftpendeleinheit 6 wirksam gedämpft wird. Wenn das Drehmoment von dem Motor die Reibungsdrehmomentkapazität zwischen der Trägerplatte 71 des Drehmomentbegrenzungsmechanismus 7 und den zwei Reibungsabschnitten übersteigt, tritt eine Relativdrehung und damit ein Schlupf zwischen der Trägerplatte 71 und den zwei Reibungsabschnitten 72, 73 auf. Auf diese Weise wird ein unerwünschter Stoß auf das Getriebe aufgrund eines auf das Getriebe übertragenen übermäßigen Drehmoments effektiv vermieden. Darüber hinaus tritt eine Relativdrehung und damit ein Schlupf zwischen der Trägerplatte 71 und den zwei Reibungsabschnitten 72, 73 auf, wenn das auf einer Getriebeseite erzeugte zurückgezogene Drehmoment die vorbestimmte Reibungsdrehmomentkapazität des Drehmomentbegrenzungsmechanismus 7 übersteigt. Auf diese Weise wird ein unerwünschter Stoß auf den Motor aufgrund eines auf den Motor übertragenen übermäßigen Drehmoments effektiv vermieden.

Die vorliegende Erfindung stellt zusätzlich zu dem Fahrzeugschwingungsdämpfer mit der oben beschriebenen Konfiguration ein Fahrzeug bereit, das einen Schwingungsdämpfer mit der oben beschriebenen Konfiguration umfasst. Das Fahrzeug kann ein herkömmliches Nicht-Hybridfahrzeug sein, das nur einen Motor als Leistungsquelle verwendet, oder ein Hybridfahrzeug, das einen Motor und mindestens eine elektrische Maschine als Leistungsquelle verwendet. Das oben erwähnte Getriebe kann verschiedene Arten von Getrieben sein, wie zum Beispiel ein Doppelkupplungsgetriebe.

Der Aufbau und die Wirkung des Fahrzeugschwingungsdämpfers gemäß der ersten Ausführungsform der vorliegenden Erfindung wurden oben beschrieben, und der Aufbau und die Wirkung des Fahrzeugschwingungsdämpfers gemäß einer zweiten Ausführungsform der vorliegenden Erfindung werden nachstehend beschrieben.

### (Fahrzeugschwingungsdämpfer gemäß der zweiten Ausführungsform der vorliegenden Erfindung)

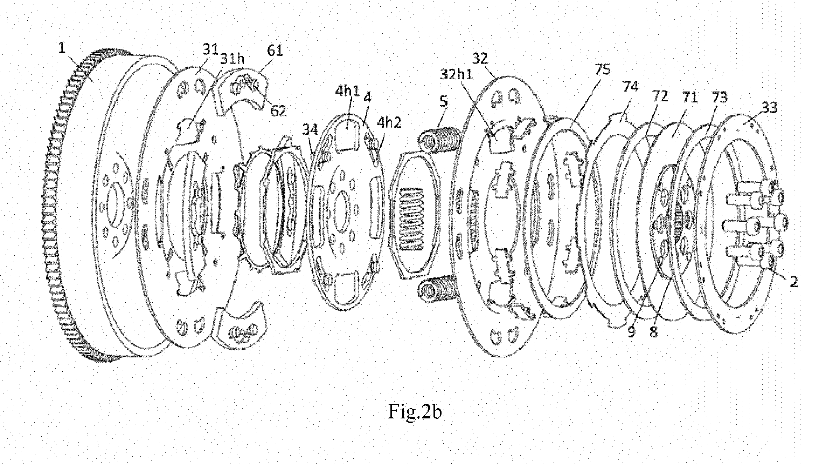

Wie in Fig. 2a und Fig. 2b gezeigt, ist der Aufbau des Fahrzeugschwingungsdämpfers gemäß der zweiten Ausführungsform der vorliegenden Erfindung im Wesentlichen gleich wie der des Fahrzeugschwingungsdämpfers gemäß der ersten Ausführungsform der vorliegenden Erfindung. Im Folgenden wird hauptsächlich der Unterschied zwischen den beiden erläutert.

In dieser Ausführungsform sind vier Fliehkraftpendeleinheiten 6 zwischen der ersten Seitenplatte 31 und der zweiten Seitenplatte 32 angeordnet, anstatt zwischen der zweiten Seitenplatte 32 und der dritten Seitenplatte 33. Und die vier Fliehkraftpendeleinheiten 6 sind auf der radial äußeren Seite des Flansches angeordnet, um eine Störung mit der Fliehkraftpendeleinheit 6 während der Drehung des Flansches relativ zu den drei Seitenplatten zu vermeiden. Dementsprechend wird die dritte Seitenplatte 33 nicht mehr mit den in der ersten Ausführungsform beschriebenen zweiten Bahnen 33h ausgebildet, welche jedoch auf der ersten Seitenplatte 31 gebildet werden.

Außerdem kann die Fliehkraftpendeleinheit 6 das in der ersten Ausführungsform beschriebene Pufferelement weglassen oder enthalten, und die zweite Seitenplatte 32 und die dritte Seitenplatte 33 können auch durch andere Befestigungselemente aneinander befestigt werden.

Obwohl in der zweiten Ausführungsform ein Fahrzeugschwingungsdämpfer mit einem anderen Aufbau als dem in der ersten Ausführungsform verwendet ist, kann die zweite Ausführungsform gemäß der vorliegenden Erfindung eine gleiche Wirkung wie die erste Ausführungsform erzielen.

Es versteht sich, dass die oben erwähnten Ausführungsformen nur beispielhaft sind und die vorliegende Erfindung nicht einschränken sollen. Der Fachmann kann verschiedene Modifikationen und Änderungen an den oben beschriebenen Ausführungsformen gemäß den Lehren der vorliegenden Erfindung vornehmen, ohne den Umfang der vorliegenden Erfindung zu verlassen.
(i) Obwohl die Anzahl der Dämpfungsfedern 5 in den obigen spezifischen Ausführungsformen als vier beschrieben wurde, ist die vorliegende Erfindung nicht darauf beschränkt. Die Anzahl der Dämpfungsfedern 5 kann nach Bedarf angepasst werden.
(ii) Zusätzlich kann die Dämpfungsfeder 5 nicht nur eine lineare Schraubenfeder wie oben beschrieben sein, sondern kann auch eine bogenförmige Schraubenfeder, eine Gummifeder oder ein Verbund oder eine Kombination aus einer Schraubenfeder und einer Gummifeder sein.

Wenn die Dämpfungsfeder 5 eine lineare Schraubenfeder ist, ist es bevorzugt, dass jede Dämpfungsfeder 5 in der oben beschriebenen Dämpfungsfederaufnahme aufgenommen ist, indem ihre Längsrichtung mit der Richtung einer Tangente zur Umfangsrichtung des Schwingungsdämpfers zusammenfällt. Wenn die Dämpfungsfeder 5 eine bogenförmige Schraubenfeder ist, ist es bevorzugt, dass jede Dämpfungsfeder 5 in der oben beschriebenen Dämpfungsfederaufnahme aufgenommen ist, indem ihre Längsrichtung mit der Umfangsrichtung des Schwingungsdämpfers zusammenfällt.

Obwohl in den oben erwähnten Ausführungsformen die Dämpfungsfedern in Umfangsrichtung gleichmäßig verteilt angeordnet sind, können sie auch in Umfangsrichtung ungleichmäßig verteilt angeordnet sein, und jede Dämpfungsfeder und jedes Federfenster zur Aufnahme der Dämpfungsfeder können auch verschiedene Größen aufweisen.
(iii) Obwohl der erste Reibungsabschnitt 72 und der zweite Reibungsabschnitt 73 in den obigen spezifischen Ausführungsformen als unabhängige Komponenten beschrieben sind, ist die vorliegende Erfindung nicht darauf beschränkt. Die beiden Reibungsabschnitte 72 und 73 können auch jeweils auf zwei entsprechenden Abstützplatten gebildet sein, die durch die Trägerplatte 71 getrennt sind.

Obwohl die Membranfeder 74 und die Stützscheibe 75 zwischen dem ersten Reibungsabschnitt 72 und der zweiten Seitenplatte 32 in den obigen spezifischen Ausführungsformen angeordnet sind, ist die vorliegende Erfindung nicht darauf beschränkt. Die Membranfeder 74 und die Stützscheibe 75 können beispielsweise auch zwischen dem zweiten Reibungsabschnitt 73 und der dritten Seitenplatte 33 angeordnet sein.
(iv) Obwohl es in den obigen spezifischen Ausführungsformen nicht ausdrücklich beschrieben ist, versteht es sich, dass beispielsweise zwischen der ersten Seitenplatte 31 und dem Flansch 4 und zwischen dem Flansch 4 und der zweiten Seitenplatte 32 ein durch mindestens eine Reibscheibe und mindestens eine Membranfeder gebildeter Dämpfungsmechanismus angeordnet sein kann, der während einer Drehung des Flansches 4 relativ zu der ersten Seitenplatte 31 und der zweiten Seitenplatte 32 einen gewünschten Dämpfungseffekt erzeugen kann.
(v) Obwohl in den obigen spezifischen Ausführungsformen die Fliehkraftpendeleinheit zwischen der ersten Seitenplatte und der zweiten Seitenplatte oder zwischen der zweiten Seitenplatte und der dritten Seitenplatte vorgesehen ist, kann die Fliehkraftpendeleinheit auch auf nur einer Seitenplatte angeordnet sein. Gleichzeitig kann der Drehmomentbegrenzungsmechanismus auch irgendwo im Drehmomentübertragungspfad vorgesehen sein.

### Beschreibung der Referenzzeichen

1 Schwungmasse
2 Erstes Befestigungselement
31 Erste Seitenplatte
31h Erstes Fenster
32 Zweite Seitenplatte
32h1 Zweites Fenster
32h2 Erste Bahn
33 Dritte Seitenplatte
33h Zweite Bahn
34 Befestigungsbegrenzungselement
4 Flansch
4h1 Drittes Fenster
4h2 Begrenzungsloch
5 Dämpfungsfeder
6 Fliehkraftpendeleinheit
61 Pendelmasse
62 Verbindungsrolle
63 Pufferelement
7 Drehmomentbegrenzungsmechanismus
71 Trägerplatte
72 Erster Reibungsabschnitt
73 Zweiter Reibungsabschnitt
74 Membranfeder
75 Stützscheibe
8 Nabenkern
9 Zweites Befestigungselement
C Motorkurbelwelle
O Mittelachse
A Axiale Richtung
R Radiale Richtung

## Patentansprüche

1. Fahrzeugschwingungsdämpfer mit einer axialen Richtung (A), einer radialen Richtung (R) und einer Umfangsrichtung, wobei ein Drehmoment von einer Leistungsquelle eines Fahrzeugs über den Fahrzeugschwingungsdämpfer auf ein Getriebe des Fahrzeugs übertragen wird, wobei das über den Fahrzeugschwingungsdämpfer übertragene Drehmoment nicht größer als eine durch den Fahrzeugschwingungsdämpfer definierte vorbestimmte Drehmomentkapazität ist, und der Fahrzeugschwingungsdämpfer verwendet wird, um eine Torsionsschwingung des übertragenen Drehmoments zu dämpfen, wobei der Fahrzeugschwingungsdämpfer umfasst:
drei Seitenplatten, die aneinander befestigt sind, wobei eine zweite Seitenplatte (32) der drei Seitenplatten in der axialen Richtung (A) sich zwischen einer ersten Seitenplatte (31) auf einer axialen Seite und einer dritten Seitenplatte (33) auf der anderen axialen Seite befindet, wobei zwischen der ersten Seitenplatte (31) und der zweiten Seitenplatte (32) eine Vielzahl von Dämpfungsfederaufnahmen ausgebildet sind;
einen Flansch (4), der (4) sich zwischen der ersten Seitenplatte (31) und der zweiten Seitenplatte (32) in der axialen Richtung (A) befindet und relativ zu der ersten Seitenplatte (31) und der zweiten Seitenplatte (32) entlang der Umfangsrichtung innerhalb eines vorbestimmten Bereichs gedreht werden kann, wobei der Flansch (4) zum Aufnehmen des Drehmoments der Leistungsquelle verwendet wird;
eine Vielzahl von Dämpfungsfedern (5), die (5) entlang der Umfangsrichtung voneinander beabstandet in den entsprechenden Dämpfungsfederaufnahmen aufgenommen sind, wobei ein Kreiswinkel, dem jede der Dämpfungsfedern (5) entspricht, 90 Grad nicht überschreitet, wobei der Flansch (4) ein Drehmoment über die Vielzahl von Dämpfungsfedern (5) auf die drei Seitenplatten übertragen kann;
eine Fliehkraftpendeleinheit (6), die (6) zwischen der ersten Seitenplatte (31) und der zweiten Seitenplatte (32) oder zwischen der zweiten Seitenplatte (32) und der dritten Seitenplatte (33) angeordnet ist oder an einer von der ersten Seitenplatte (31), der zweiten Seitenplatte (32) und der dritten Seitenplatte (33) angeordnet ist; und
einen Drehmomentbegrenzungsmechanismus (7), der (7) zwischen der zweiten Seitenplatte (32) und der dritten Seitenplatte (33) angeordnet ist, um die vorbestimmte Drehmomentkapazität zu definieren.

2. Fahrzeugschwingungsdämpfer nach Anspruch 1, **dadurch gekennzeichnet, dass** der Fahrzeugschwingungsdämpfer ferner eine Schwungmasse (1) umfasst, die (1) mit dem Flansch (4) zusammen befestigt ist.

3. Fahrzeugschwingungsdämpfer nach Anspruch 1 oder 2, **dadurch gekennzeichnet, dass** die erste Seitenplatte (31) und die zweite Seitenplatte (32) jeweils mit einander gegenüberliegenden Fenstern (31h, 32h1) zum Bilden der Dämpfungsfederaufnahmen ausgebildet sind, sodass die Dämpfungsfeder (5) zwischen der ersten Seitenplatte (31) und der zweiten Seitenplatte (32) montiert ist, und
die zweite Seitenplatte (32) auch mit Bahnen (32h2) zum Definieren einer Bewegungstrajektorie einer Pendelmasse (61) der Fliehkraftpendeleinheit (6) ausgebildet ist.

4. Fahrzeugschwingungsdämpfer nach einem der Ansprüche 1 bis 3, **dadurch gekennzeichnet, dass** der Drehmomentbegrenzungsmechanismus (7) eine Trägerplatte (71) und zwei Reibungsabschnitte (72, 73) umfasst, die in der axialen Richtung (A) durch die Trägerplatte (71) voneinander beabstandet angeordnet sind, wobei unter Verwendung der Reibung zwischen den zwei Reibungsabschnitten (72, 73) und der Trägerplatte (71) ein Drehmoment von den drei Seitenplatten über die beiden Reibungsabchnitte (72, 73) auf die Trägerplatte (71) übertragen werden kann.

5. Fahrzeugschwingungsdämpfer nach Anspruch 4, **dadurch gekennzeichnet, dass** der Drehmomentbegrenzungsmechanismus (7) ferner eine Membranfeder (74) umfasst, die (74) zwischen der zweiten Seitenplatte (32) und dem entsprechenden Reibungsabschnitt (72) oder zwischen der dritten Seitenplatte (33) und dem entsprechenden Reibungsabschnitt (73) angeordnet ist, wobei durch eine Federkraft der Membranfeder (74) in der axialen Richtung (A) die beiden Reibungsabschnitte (72, 73) die Trägerplatte (71) kraftschlüssig klemmen können.

6. Fahrzeugschwingungsdämpfer nach Anspruch 5, **dadurch gekennzeichnet, dass** der Drehmomentbegrenzungsmechanismus (7) ferner eine Stützscheibe (75) umfasst, die (75) zwischen der Membranfeder (74) und dem entsprechenden Reibungsabschnitt (72, 73) angeordnet ist.

7. Fahrzeugschwingungsdämpfer nach einem der Ansprüche 1 bis 6, **dadurch gekennzeichnet, dass** die Fliehkraftpendeleinheit (6) auf einer radial äußeren Seite des Flansches (4) oder einer radial äußeren Seite des Drehmomentbegrenzungsmechanismus (7) angeordnet ist.

8. Fahrzeugschwingungsdämpfer nach Anspruch 7, **dadurch gekennzeichnet, dass** die Fliehkraftpendeleinheit (6) eine Pendelmasse (61) und ein Pufferelement (63) zum Puffern einer radialen Stoßbelastung der Pendelmasse (61) umfasst, wobei das Pufferelement (63) auf einer radial inneren Seite der Pendelmasse (61) angeordnet ist und wobei das Pufferelement (63) an der ersten Seitenplatte (31) und der zweiten Seitenplatte (32) oder an der zweiten Seitenplatte (32) und der dritten Seitenplatte (33) befestigt ist.

9. Fahrzeugschwingungsdämpfer nach einem der Ansprüche 1 bis 8, **dadurch gekennzeichnet, dass** der Fahrzeugschwingungsdämpfer ferner einen Nabenkern (8) umfasst, der drehfest mit der Trägerplatte (71) des Drehmomentbegrenzungsmechanismus (7) verbunden ist, wobei der Nabenkern (8) in der Lage ist, ein Drehmoment auf eine Eingangswelle des Getriebes zu übertragen.

10. Fahrzeug, umfassend einen Fahrzeugschwingungsdämpfer nach einem der Ansprüche 1 bis 9.
